# FASCICULE DE BREVET EUROPEEN

(11) **EP 1 522 356 B1**
(45) Date de publication et mention de la délivrance du brevet: **30.08.2006**
(21) Numéro de dépôt: 04292357.3
(22) Date de dépôt: 05.10.2004
(51) Int. Cl.: B21D 41/00, F16L 19/028

(54) **Dispositif de raccordement étanche d'un tube à un nez tubulaire fileté**
Abgedichtete Kupplungsvorrichtung für ein Rohr mit einem mit einem Gewinde versehenen Fortsatz
Sealed coupling device for a tube with a threaded extension section

(30) Priorité: 10.10.2003 FR 0311877
(43) Date de publication de la demande: 13.04.2005
(73) Titulaire: LEGRIS S.A., F-35000 Rennes (FR)
(72) Inventeur: Leblais, Sébastien, 35000 Rennes (FR)
(74) Mandataire: Robert, Jean-Pierre

(56) Documents cités:
- GB-A- 944 539
- US-A- 2 781 207
- US-A- 2 956 820
- US-A- 2 971 781
- US-A- 5 810 054

## Description

Le raccordement d'un tube à un organe de liaison ou fonctionnel met souvent en oeuvre un embout ou nez fileté tubulaire appartenant à cet organe, sur lequel vient se visser un écrou de retenue du tube qui coopère par exemple avec une collerette extérieure de ce dernier pour constituer un arrêt axial tandis qu'un organe d'étanchéité est prévu entre un chambrage du nez et la surface extérieure du tube.

### ARRIERE PLAN DE L'INVENTION

Ce type de dispositif demande en général d'employer des tubes bien calibrés et surtout bien soutenus dans le nez pour que l'étanchéité de la connexion soit correctement assurée. C'est pourquoi leur utilisation est limitée à des diamètres de tubes relativement faibles pour lesquels le rapport épaisseur / diamètre est assez important. Dans le cas de diamètres plus importants, on utilise des embouts rapportés à l'extrémité des tubes, ces embouts étant réalisés de manière séparée, avec des tolérances de fabrication mieux maîtrisées. Le coût de ce genre de raccordements est naturellement plus élevé, surtout du fait de l'assemblage préalable entre tubes et embouts. En outre, lorsqu'il s'agit de réaliser une installation in situ, par exemple une installation de distribution de fluide comprimé, il est souvent nécessaire d'ajuster en longueur les tubes de l'installation. Il faut alors que le tube soit raccordable en l'état avec un minimum d'intervention sur son extrémité coupée. Cette intervention consiste à créer un bourrelet ou plus généralement des saillies périphériques du tube pour former des moyens de blocage axial du tube dans le raccord. Cette intervention engendre une déformation du tube qui nuit à l'étanchéité du raccord. Enfin, on notera également que dans tous les dispositifs de l'état de la technique, l'anneau d'étanchéité mis en place est souvent blessé ou emporté par l'extrémité du tube à raccorder lors de son insertion dans le nez tubulaire.

Un dispositif de raccordement selon le préambule de la revendication 1 est connu par le document US-A-2 781 207.

### OBJET DE L'INVENTION

Les moyens de raccordement de l'invention sont de nature à rendre la connexion plus simple à réaliser et plus sûre en fonctionnement, notamment au plan de l'étanchéité.

### BREVE DESCRIPTION DE L'INVENTION

Ainsi, l'invention a pour objet un dispositif de raccordement étanche d'un tube à un nez tubulaire suivant la revendication 1, le tube étant équipé d'un bourrelet extérieur à distance de son extrémité et le nez tubulaire présentant un filetage extérieur et comportant un alésage d'entrée pour définir un logement pour un joint annulaire et pour un insert annulaire de retenue du joint.

Selon l'une des caractéristiques principales de l'invention, le dispositif comporte d'une part un écrou traversé par le tube, présentant un filetage intérieur d'extrémité pour coopérer avec le filetage du nez tubulaire et comportant une chambre à l'arrière du filetage, limitée à l'opposé de ce dernier par une paroi d'entraînement et comporte d'autre part, un collier d'entraînement axial susceptible d'être placé de manière amovible entre un flanc du bourrelet du tube et la paroi d'entraînement de l'écrou, ce collier s'étendant axialement en direction de l'extrémité du tube au-delà du bourrelet dans la chambre susdite de l'écrou pour d'une part, coopérer avec l'insert, lequel est coulissant dans son logement et est en forme de poussoir de compression du joint entre l'alésage et le tube et d'autre part former un manchon de soutien du tube entre le nez tubulaire et l'écrou.

On comprend ainsi que lorsqu'on réalise la connexion, on crée de manière classique une retenue axiale du tube dans le nez tubulaire et on force le joint à se déformer dans un espace délimité d'une part par la surface extérieure du tube et d'autre part par une ou plusieurs surfaces (une surface radiale et/ou une surface cylindrique) du logement du joint appartenant au nez fileté de sorte qu'on est ainsi sûr de créer des lignes continues d'étanchéité, même en présence d'une déformation de la surface extérieure du tube, entre l'intérieur du tube et l'atmosphère. En outre, la fonction de soutien du tube par le collier permet de rigidifier la connexion à l'encontre des sollicitations en flexion.

Dans un mode de réalisation préféré de l'invention, le collier d'entraînement est en deux demi-colliers identiques, chacun possédant des moyens d'extrémité complémentaires coopérant à la reconstitution démontable du collier.

D'autres réalisations de ce collier sont possibles. Par exemple il peut être réalisé en une seule pièce dans un matériau expansible radialement de sorte que ce collier peut être glissé sur le tube à partir de son extrémité, et passer le relief du collier grâce à cette déformation radiale possible, élastique ou non.

On peut également imaginer que le bourrelet soit discontinu et que le collier puisse être en une seule pièce montée sur le tube pour chevaucher les saillies discontinues de ce dernier à la manière d'une baïonnette avec une indexation angulaire autour de l'axe du tube du collier une fois le bourrelet passé.

Dans le cas d'un collier réalisé à partir de deux demi-colliers, les moyens d'extrémités de chaque demi-collier sont formés par une languette et une encoche coopérant par friction dans le sens circonférentiel du collier.

Egalement dans un mode préféré de réalisation de l'invention, le poussoir est monté coulissant mais prisonnier axialement dans l'alésage du nez qui le reçoit. On constitue ainsi une unité fonctionnelle formée par le nez fileté, le poussoir et le joint retenu à l'intérieur du nez tubulaire.

Le diamètre extérieur du collier, à son extrémité tournée vers le poussoir, est au plus égal au diamètre de l'alésage du nez dans lequel coulisse le poussoir. Cette disposition autorise la pénétration du collier à l'intérieur de cet alésage dont la paroi constitue une sorte de cerclage du collier en même temps qu'un support radial de ce dernier. Aussi, si chaque demi-collier forme de chaque côté du bourrelet un berceau de soutien pour le tube, améliorent le guidage du tube dans le raccord et son support radial permettant de créer un pseudo-encastrement du tube dans le raccord et donc de résister aux déformations qui pourraient naître d'une flexion du tube à l'extérieur du raccord. Cette résistance à la déformation est un gage au maintien d'une bonne étanchéité du raccord.

Dans ce cas de figure, chaque berceau de chaque demi-collier est séparé axialement de l'autre par une gorge de réception du bourrelet dont la largeur dans le sens axial est supérieure à la largeur du bourrelet mesurée dans la même direction. Il est ainsi possible de dégager par coulissement axial les deux demi-colliers de l'alésage du nez dans lequel coulisse le poussoir, afin de pouvoir ensuite les séparer l'un de l'autre et démonter totalement comme cela sera expliqué par la suite, leur raccord.

Les flancs ou au moins l'un des flancs du bourrelet du tube sont coniques, de même que la surface d'entraînement portée par l'écrou à l'arrière de la chambre.

Lors du serrage, cette conicité améliore le maintien du tube dans le nez en ce qui concerne son centrage puisque l'effort de serrage possède une composante radiale centrifuge.

Un objet secondaire de l'invention réside dans une union double, mettant en oeuvre le dispositif décrit ci-dessus, qui comporte un corps pourvu de deux nez tubulaires opposés dont la longueur axiale est telle que lorsque le corps est en butée contre l'un ou l'autre des bourrelets des tubes à connecter, par l'intermédiaire du poussoir de compression du joint, les demi-colliers d'entraînement ayant été retirés, l'extrémité du tube équipée de l'autre bourrelet est axialement écartée de l'extrémité libre du corps éloignée du bourrelet sur lequel il bute. Cette caractéristique dimensionnelle permet, lorsque deux tubes sont réunis par une union double, de défaire le raccordement de ces deux tubes, d'éclipser le corps de l'union double sur l'un des tubes de manière que le deuxième tube puisse être retiré dans une direction radiale pure (éclissage).

L'invention concerne enfin un tube à connecter au moyen du dispositif ou de l'union double tel que décrit ci-dessus, dans lequel le bourrelet qu'il comporte à distance de son extrémité est en forme d'au moins trois emboutis circonférentiellement répartis dans la paroi du tube.

Ces emboutis sont réalisés soit en usine soit sur chantier au moyen d'une pince spéciale connue en elle-même.

D'autre caractéristiques préférées et avantages de l'invention apparaîtront au cours de la description donnée ci-après d'un de ses modes de réalisation.

### BREVE DESCRIPTION DES DESSINS

Il sera fait référence aux dessins annexés parmi lesquels :
- la figure 1 est une vue éclatée de tous les éléments formant le dispositif de raccordement selon l'invention,
- la figure 2 est une vue en coupe des éléments de la figure 1, le raccord étant prémonté mais non serré,
- la figure 3 illustre, par une demi-coupe axiale, une union double faisant application du raccord selon l'invention dans son état serré,
- la figure 4 illustre le démontage de l'union double de la figure 3, permettant le retrait radial d'un des tubes raccordés.

### DESCRIPTION DETAILLEE DE L'INVENTION

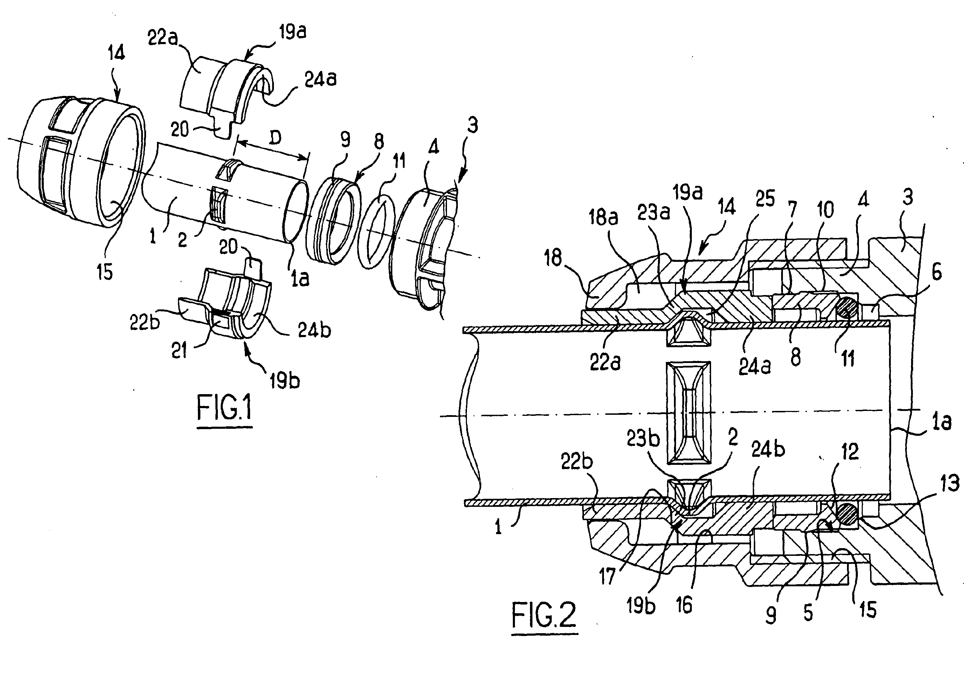

Sur les figures, le tube 1 possède une extrémité 1a à distance D de laquelle il comporte un bourrelet 2 formé ici de quatre saillies externes obtenues par emboutis de la paroi du tube au moyen d'une pince appropriée. Un organe de liaison fonctionnel 3 est partiellement représenté à la figure 1 et possède un nez tubulaire 4 fileté extérieurement et comportant un alésage d'entrée 5. Dans le cas particulier des figures, cet alésage d'entrée est en fait un alésage étagé avec une section arrière 6 de plus petit diamètre qu'une section avant 7 dans laquelle est monté à coulissement un insert 8. Cet insert 8 possède une dent circulaire extérieure 9 qui est reçue par une gorge 10 de la section 7 de l'alésage d'entrée, gorge beaucoup plus large que la dent circulaire 9 de sorte que l'insert 8 est monté coulissant mais prisonnier dans la section 7. Un joint torique 11 est logé à l'état libre dans la section 7 de l'alésage 5 situé entre la section 6 et l'insert 8. Ce joint torique 11 est destiné à pénétrer dans la section 6 de l'alésage lorsque, comme décrit ci-après, l'insert 8 joue un rôle de poussoir et comprime le joint 11 par l'intermédiaire de sa face de poussée conique avant 12 en le forçant à pénétrer dans la section 6 qui est raccordée à la section 5 par également une surface conique 13.

Le dispositif de raccordement de l'invention comporte un écrou 14 connu en lui-même avec une section avant pourvue d'un filetage intérieur 15 prolongée vers l'arrière par une chambre 16 se terminant par une surface d'entraînement 17, ici conique et formée de segments discontinus, cette surface d'entraînement 17 étant portée par la paroi arrière 18 de l'écrou au travers de laquelle peut passer le tube 1. On indiquera à propos de cette paroi arrière 18 qu'elle comporte en réalité des cannelures 18a non débuchantes vers l'arrière, définissant ainsi une surface 17 non continue, ce pour alléger l'écrou 14.

Le dispositif de raccordement de l'invention comporte enfin un collier d'entraînement formé de deux parties identiques 19a, 19b, formant ainsi chacune un demi-collier. Chaque demi-collier est placé en chevauchement du bourrelet 2 et est réuni à l'autre demi-collier par un jeu de languettes 20 et encoches 21 qui coopèrent par friction dans le sens circonférentiel du collier. De manière plus précise, chaque languette 20 est trapézoïdale et pénètre dans une encoche 21 également trapézoïdal de sorte que lorsque l'on force les colliers l'un contre l'autre, il se produit un coincement de la languette 20 dans l'encoche 21, le collier étant alors assemblé par friction.

Tel que représenté aux figures, chaque demi-collier possède une partie arrière 22a, 22b qui forme un berceau venant s'appliquer contre le tube 1 au-delà du bourrelet 2, une partie de paroi conique 23a, 23b qui s'interpose entre le flanc arrière du bourrelet 2 et la surface de poussée 17 de l'écrou 14, et enfin une extension avant 24a, 24b s'étendant en direction de l'extrémité 1a du tube, et susceptible d'être en appui sur l'extrémité de l'insert 8 opposé à la surface conique 12 de ce dernier. De manière préférée, chaque extension 24a, 24b constitue également un berceau venant s'appliquer sur la partie du tube 1 comprise entre son extrémité 1a et le bourrelet 2. Le diamètre extérieur des parties 24a et 24b est au plus égal au diamètre de la section 7 de l'alésage 5 du nez tubulaire de manière à pouvoir y pénétrer au moment du serrage de l'écrou. Entre les berceaux, chaque demi-collier comporte une gorge 25 de réception du bourrelet 2 et dont la largeur axiale est supérieure à l'épaisseur axiale de ce bourrelet de sorte qu'il y ait une possibilité de coulissement axial limité du collier refermé sur le tube.

On notera également que les sections 15 et 16 de l'écrou 14 ont un diamètre intérieur supérieur à celui extérieur du collier.

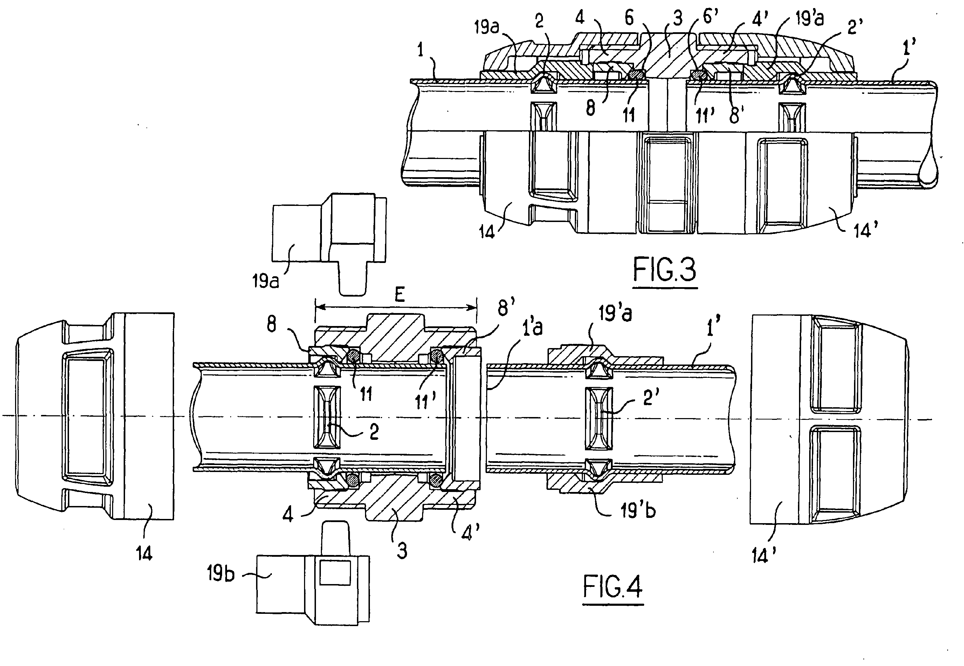

La figure 3 illustre d'une part le dispositif de raccordement ci-dessus décrit dans son état serré. On constate en effet que dans cet état, le collier 19a, 19b a repoussé l'insert 8 qui forme poussoir en direction de la section 6 de l'alésage 5 du nez 4 de l'organe 3 de sorte que le joint 11 a été forcé dans cette section afin de constituer de manière certaine une ligne continue de contact avec le tube 1, une ligne continue de contact avec la surface radiale extrême de la section 6 et/ou une ligne continue de contact avec la surface cylindrique de cette section. Il existe donc une barrière certaine d'étanchéité entre l'intérieur du tube et l'atmosphère extérieure. En comparant les figures 2 et 3, on comprend que lorsque (figure 2) les moyens de raccordement ne sont pas serrés, le joint n'est pas au contact du tube car il a été choisi à dessein d'un diamètre intérieur plus important que le diamètre extérieur du tube. Ainsi à l'introduction du tube ce joint n'est pas blessé par l'extrémité 1a du tube qui est souvent agressive du fait d'une coupe sur chantier. Il ne risque pas non plus d'être emporté par cette extrémité lors de son introduction.

A la figure 3, la contrainte imposée au joint par le poussoir 8 force la déformation du joint notamment centrifuge pour assurer le contact sur le tube.

La figure 3 illustre également le fait que l'organe 3 est ici constitué comme le corps d'une union double qui possède deux nez opposés 4 et 4', le nez 4' coopérant de manière tout à fait semblable avec les mêmes éléments de raccordement que ceux déjà décrits pour un tronçon de tube 1' pourvu d'un bourrelet 2'.

On retrouve sur la figure 3 comme sur la figure 4 les éléments déjà décrits avec les mêmes références, la notation "prime" étant affectée à la connexion du tube 1'.

A la figure 4, il est représenté l'union double dans son état permettant de retirer le tube 1' dans une direction A transversale à son axe X, sans avoir à le manoeuvrer parallèlement à cet axe, manoeuvre qui pourrait être empêchée par des moyens de connexion de l'autre extrémité de ce tube 1'. Pour obtenir ce résultat, le corps 3 de l'union double est d'une longueur axiale E qui satisfait aux exigences suivantes. Lorsqu'on déconnecte le tube 1' du tube 1, on défait les deux écrous 14, 14'. Du côté de l'écrou 14 par exemple, on extrait les deux demi-colliers 19a, 19b de leur engagement dans le poussoir 8 par leur coulissement sur le tube 1 permis par la largeur de la gorge 25, on les sépare et les retire, ce qui permet de faire coulisser le corps 3 sur le tube 1 jusqu'au moment où le poussoir 8 vient en butée sur le bourrelet 2. On aura noté que le poussoir 8 est ici réalisé de manière tubulaire avec un chambrage interne 8a dont le diamètre est supérieur au diamètre au sommet du bourrelet 2 afin de gagner en distance de coulissement possible du corps 3 de l'union double sur le tube 1. Dans cette position, l'extrémité libre du nez tubulaire 4' de l'union double est axialement éloignée de l'extrémité 1'a du tube 1' qui donc n'a plus d'obstacle pour pouvoir être déplacée radialement par rapport au tube 1 (éclissage).

## Revendications

1. Dispositif de raccordement étanche d'un tube (1) à un nez tubulaire (4), le tube étant équipé d'un bourrelet extérieur (2) à distance de son extrémité (1a), le nez tubulaire présentant un filetage extérieur et comportant un alésage d'entrée (5) pour définir un logement pour un joint annulaire (11) et un insert annulaire (8) de retenue de ce joint, comportant :
- un écrou (14), traversé par le tube (1), présentant un filetage intérieur (15) d'extrémité pour coopérer avec le filetage du nez tubulaire (4) et comportant une chambre (16) à l'arrière du filetage, limitée à l'opposé de ce dernier par une paroi d'entraînement (17);
- un collier d'entraînement axial (19a, 19b) susceptible d'être placé de manière amovible entre un flanc du bourrelet (2) du tube et la paroi d'entraînement (17) de l'écrou,
**caractérisé en ce que** ce collier s'étend axialement en direction de l'extrémité (1a) du tube au-delà du bourrelet (2) dans la chambre (16) susdite de l'écrou pour d'une part coopérer avec l'insert (8), lequel est coulissant dans son logement (7) et est en forme de poussoir de compression du joint (11) entre l'alésage (5) et le tube (1) et d'autre part, former un manchon de soutien du tube entre le nez tubulaire (4) et l'écrou (14).

2. Dispositif selon la revendication 1, **caractérisé en ce que** le collier d'entraînement est en deux demi-colliers (19a, 19b) identiques, chacun possédant des moyens (20, 21) d'extrémité complémentaires coopérant à la reconstitution démontable du collier.

3. Dispositif de raccordement selon la revendication 2, **caractérisé en ce que** les moyens d'extrémités sont formés sur chaque demi-collier par une languette (20) et une encoche (21) coopérant par friction dans le sens circonférentiel du collier.

4. Dispositif selon l'une quelconque des revendications précédentes, **caractérisé en ce que** le poussoir (8) est monté coulissant mais prisonnier axialement dans l'alésage (5) du nez (4) qui le reçoit.

5. Dispositif selon l'une des revendications précédentes, **caractérisé en ce que** le diamètre extérieur du collier (19a, 19b) à son extrémité tournée vers le poussoir (8) est au plus égal au diamètre de l'alésage (5) du nez dans lequel coulisse le poussoir (8).

6. Dispositif selon la revendication 5, **caractérisé en ce que**, le joint (11) étant comprimé dans son logement par le poussoir, l'extrémité de ce dernier opposée au joint est située à l'intérieur du nez (4).

7. Dispositif selon la revendication 5 ou la revendication 6, **caractérisé en ce que** chaque demi-collier (19a, 19b) forme de chaque côté du bourrelet un berceau (22a, 22b, 24a, 24b) de soutien pour le tube(1).

8. Dispositif selon la revendication 7, **caractérisé en ce que** chaque berceau est séparé axialement de l'autre par une gorge (25) de réception du bourrelet dont la largeur dans le sens axial est supérieure à la largeur du bourrelet (2) mesurée dans la même direction.

9. Dispositif selon l'une quelconque des revendications précédentes, **caractérisé en ce que** les flancs du bourrelet (2) du tube (1) sont coniques, de même que la surface (17) d'entraînement de l'écrou.

10. Union double, comprenant deux dispositifs selon l'une quelconque des revendications précédentes, **caractérisée en ce qu'**elle comporte un corps (3) pourvu des deux nez tubulaires (4, 4') opposés, dont la longueur axiale est telle que lorsque le corps (3) est en butée contre l'un ou l'autre des bourrelets (2, 2') des tubes à connecter, par l'intermédiaire du poussoir (8) de compression du joint, l'extrémité (1'a) du tube (1') équipée de l'autre bourrelet est axialement écartée du nez tubulaire (4') éloigné du bourrelet (2) sur lequel bute le corps (3).

11. Dispositif de raccordement ou union double selon l'une quelconque des revendications précédentes, **caractérisé en ce que** le bourrelet (2) que le tube (1) comporte à distance de son extrémité (1a) est en forme d'au moins trois emboutis circonférentiellement répartis dans la paroi du tube (1).

## Claims

1. A device for leaktight coupling of a tube (1) to a tubular nose (4), the tube being provided with an outwardly-directed bead (2) at a distance from its end (1a), the tubular nose presenting an outside thread and including an inlet bore (5) for defining a housing for an annular gasket (11) and an annular insert (8) for retaining the gasket, the device comprising:
- a nut (14) having the tube (1) passing therethrough, the nut presenting an end inside thread (15) to co-operate with the thread of the tubular nose (4) and including a chamber (16) behind the thread, the chamber being terminated going away therefrom by a drive wall (17); and
- an axial drive collar (19a, 19b) suitable for being removably placed between one flank of the bead (2) on the tube and the drive wall (17) of the nut;
the device being **characterized in that** the collar extends axially towards the end (1a) of the tube beyond the bead (2) in the above-mentioned chamber (16) of the nut, firstly to co-operate with the insert (8) which is slidable in its housing (7) and is in the form of a pusher for compressing the gasket (11) between the bore (5) and the tube (1), and secondly to form a sleeve for supporting the tube between the tubular nose (4) and the nut (14).

2. A device according to claim 1, **characterized in that** the drive collar comprises two identical half-collars (19a, 19b), each possessing complementary end means (20, 21) co-operating separably to reconstitute the collar.

3. A coupling device according to claim 2, **characterized in that** the end means are formed on each half-collar by a tongue (20) and a notch (21) that co-operate by friction in the circumferential direction of the collar.

4. A device according to any preceding claim, **characterized in that** the pusher (8) is mounted slidably while being held captive axially in the bore (5) of the nose (4) that receives it.

5. A device according to any preceding claim, **characterized in that** the outside diameter of the collar (19a, 19b) at its end facing towards the pusher (8) is no greater than the diameter of the bore (5) of the nose in which the pusher (8) slides.

6. A device according to claim 5, **characterized in that** when the gasket (11) is compressed in its housing by the pusher, the end of the pusher remote from the gasket is situated inside the nose (4).

7. A device according to claim 5 or claim 6, **characterized in that** each half-collar (19a, 19b) forms a cradle (22a, 22b, 24a, 24b) on either side of the bead for supporting the tube (1).

8. A device according to claim 7, **characterized in that** each cradle is axially separated from the other by a groove (25) for receiving the bead, the width of the groove in the axial direction being greater than the width of the bead (2) measured in the same direction.

9. A device according to any preceding claim, **characterized in that** the flanks of the bead (2) of the tube (1) are conical, as is the drive surface (17) of the nut.

10. A double union comprising two devices according to any preceding claim, the union being **characterized in that** it comprises a body (3) provided with two opposite tubular noses (4, 4') of axial length such that when the body (2) is in abutment against one or the other of the beads (2, 2') of the tubes for connection, via the gasket compression pusher (8), the end (1'a) of the tube (1') provided with the other bead is axially set back from the tubular nose (4') remote from the bead (2) against which the body (3) comes into abutment.

11. A device or a double union according to any preceding claim, **characterized in that** the bead (2) that the tube includes at a distance from its end (1a) is in the form of at least three circumferentially spaced-apart stampings in the wall of the tube (1).

## Patentansprüche

1. Verbindungsvorrichtung zur dichten Verbindung eines Rohres (1) mit einem rohrförmigen Stutzen (4), wobei das Rohr in einem Abstand von seinem Ende (1a) mit einem Außenwulst (2) versehen ist, wobei der rohrförmige Stutzen ein Außengewinde aufweist und eine Eingangsbohrung (5) umfasst, um eine Aufnahme für eine ringförmige Dichtung (11) festzulegen, sowie einen ringförmigen Einsatz (8) zum Halten dieser Dichtung, umfassend:
eine Mutter (14), die von dem Rohr (1) durchsetzt wird und am Ende ein Innengewinde (15) hat, um mit dem Gewinde des rohrförmigen Stutzens (4) zusammenzuwirken, und hinter dem Gewinde eine Kammer (16) umfasst, die auf der dem Gewinde entgegengesetzten Seite von einer Mitnehmerwand (17) begrenzt wird,
eine Schelle (19a, 19b) zur axialen Mitnahme, die dazu geeignet ist, auf abnehmbare Weise zwischen einer Flanke des Wulstes (2) des Rohres und der Mitnehmerwand (17) der Mutter platziert zu werden,
**dadurch gekennzeichnet, dass** sich diese Schelle axial in Richtung des Endes (1a) des Rohres über den Wulst (2) hinaus in die oben genannte Kammer (16) der Mutter erstreckt, um einerseits mit dem Einsatz (8) zusammenzuwirken, der in seiner Aufnahme (7) verschiebbar gelagert ist und die Form eines Druckstößels hat, um die Dichtung (11) zwischen der Bohrung (5) und dem Rohr (1) zusammenzudrücken, und um andererseits eine Hülse zum Halten des Rohres zwischen dem rohrförmigen Stutzen (4) und der Mutter (14) zu bilden.

2. Vorrichtung nach Anspruch 1, **dadurch gekennzeichnet, dass** die Mitnehmerschelle aus zwei identischen Halbschellen (19a, 19b) besteht, die jeweils komplementäre Endmittel (20, 21) haben, die beim lösbaren Zusammenfügen der Schelle zusammenwirken.

3. Verbindungsvorrichtung nach Anspruch 2, **dadurch gekennzeichnet, dass** die Endmittel an jeder Halbschelle aus einer Lasche (20) und einer Einkerbung (21) gebildet sind, die durch Reibung in Umfangsrichtung der Schelle zusammenwirken.

4. Vorrichtung nach einem der vorhergehenden Ansprüche, **dadurch gekennzeichnet, dass** der Stößel (8) zwar verschiebbar gelagert, aber axial in der ihn aufnehmenden Bohrung (5) des Stutzens (4) eingeschlossen ist.

5. Vorrichtung nach einem der vorhergehenden Ansprüche, **dadurch gekennzeichnet, dass** der Außendurchmesser der Schelle (19a, 19b) an deren zum Stößel (8) zeigenden Ende mindestens gleich dem Durchmesser der Bohrung (5) des Stutzens ist, in der der Stößel (8) gleitet.

6. Vorrichtung nach Anspruch 5, **dadurch gekennzeichnet, dass** sich, wenn die Dichtung (11) von dem Stößel in ihrer Aufnahme zusammengedrückt wird, das Ende dieses Stößels, das der Dichtung entgegengesetzt ist, im Inneren des Stutzens (4) befindet.

7. Vorrichtung nach Anspruch 5 oder Anspruch 6, **dadurch gekennzeichnet, dass** jede Halbschelle (19a, 19b) auf jeder Seite des Wulstes eine Schale (22a, 22b, 24a, 24b) zum Halten des Rohres (1) bildet.

8. Vorrichtung nach Anspruch 7, **dadurch gekennzeichnet, dass** jede Schale axial von der anderen durch eine Nut (25) zur Aufnahme des Wulstes getrennt ist, deren Breite in axialer Richtung größer als die Breite des Wulstes (2) ist, die in gleicher Richtung gemessen wird.

9. Vorrichtung nach einem der vorhergehenden Ansprüche, **dadurch gekennzeichnet, dass** die Flanken des Wulstes (2) des Rohres (1) kegelförmig sind, ebenso wie die Mitnehmerfläche (17) der Mutter.

10. Doppelverbindung, umfassend zwei Vorrichtungen nach einem der vorhergehenden Ansprüche, **dadurch gekennzeichnet, dass** sie ein Gehäuse (3) umfasst, das mit zwei einander entgegengesetzten rohrförmigen Stutzen (4, 4') versehen ist, deren axiale Länge derart ist, dass, wenn das Gehäuse (3) an dem einen oder dem anderen der Wülste (2, 2') der zu verbindenden Rohre über den Stößel (8) zum Zusammendrücken der Dichtung anstößt, das Ende (1'a) des Rohres (1'), das mit dem anderen Wulst versehen ist, axial zum rohrförmigen Stutzen (4') beabstandet ist, der von dem Wulst (2), an dem das Gehäuse (3) anstößt, entfernt liegt.

11. Verbindungsvorrichtung oder Doppelverbindung nach einem der vorhergehenden Ansprüche, **dadurch gekennzeichnet, dass** der Wulst (2), den das Rohr (1) in einem Abstand von seinem Ende (1a) hat, in Form von mindestens drei Ausbauchungen vorliegt, die in Umfangsrichtung in der Wand des Rohres (1) verteilt sind.
